# EUROPEAN PATENT SPECIFICATION

(11) **EP 2 149 436 B1**
(45) Date of publication and mention of the grant of the patent: **10.11.2010**
(21) Application number: 08161493.5
(22) Date of filing: 30.07.2008
(51) Int. Cl.: B26D 1/00, B26D 7/18

(54) **Apparatus and method for removing of foam remain parts from a foam product**
Vorrichtung und Verfahren zum Entfernen von Schaumresten von einem Schaumprodukt
Appareil et procédé de suppression des pièces restantes en mousse dans un produit en mousse

(43) Date of publication of application: 03.02.2010
(73) Proprietor: Metzeler Schaum GmbH, 87700 Memmingen (DE); Dolphin Pack Srl, 37010 Affi (VR) (IT)
(72) Inventor: Maidhof, Volker, 87776 Sontheim (DE); Kilian, Iber, 87700 Memmingen-Eisenburg (DE); Hüber, Kurt, 87789 Woringen (DE); Zaninelli, Davide, 37013 Caprino Veronese (IT)
(74) Representative: Preissner, Nicolaus

(56) References cited:
- DE-A1- 2 234 864
- DE-A1- 4 133 779
- DE-C1- 3 806 070

## Description

The present invention relates to an apparatus and a method for removing of a foam remain part arranged in a slit of a foam product, in particular a mattress.

In the production of foam products, in particular of mattresses and parts of mattresses, produced from foam blocks made of elastic polyurethane soft foam transversal cuts or incisions are provided in order to reach different stiffnesses along the longitudinal and/or transversal direction of the mattress. After cutting the foam block the foam remain parts defined by the cuts are removed manually from the foam product.

In DE 2 234 864 A1 a method and an apparatus for manufacturing of a rigid foam strip is disclosed. The foam strip comprises a carrier which supports a grid comprising transverse and longitudinal ribs which delimit hollow spaces. The foam is supplied to the hollow spaces by means of a slit die. Further, the moulded strips are diverted at diverting rollers in order to open the gaps such that the foam remains can be removed.

DE 41 33 779 A1 discloses a method and apparatus for automatically trimming of foam blocks. The trimming remains being obtained on a working table are removed by roller belts.

DE 38 06 070 C1 discloses a method and apparatus for continuously producing sandwich elements. The apparatus comprises a cleaning device with blasting nozzles and brushes for removing dust from the sandwich elements.

It is an object of the present invention to provide an apparatus and a method for an easy and automatic removal of foam remains from a foam product, in particular from a mattress.

The above object is achieved by an apparatus according to claim 1 and a method according to claim 10.

Preferred embodiments are described in claims 2 to 9 and 11 to 14.

According to the present invention an apparatus for removing of foam remains arranged in a slit of a foam product, in particular a mattress, comprises a bending device for opening the slit by means of bending the foam product and at least one removing tool for removing the foam remain part from the open slit.

According to a preferred embodiment for removing the foam remain part from the slit the removing tool engages with the slit and/or grips the foam remain part.

The term "gripping" or "grip" as used in the present application encompasses grabbing, grasping, seizing, camming, pushing and/or pulling out. Further, the term "slit" as used in the present application encompasses a cut, an incision, a gap or a recess.

According to a preferred embodiment the removing tool is movable, in particular rotatable around a rotating axis. In particular, the removing tool can be moved along a horizontal and/or vertical direction in relation to the position or movement of the foam product in order to enable the removing tool to be positioned in its best position to engage with the slit and/or grip the foam remain part. The removing tool can be rotated around a rotating axis which for example extends along a direction perpendicular to a processing direction of the foam product.

In another preferred embodiment the removing tool comprises a roller body and at least one arm, in particuar a paddle, mounted to the roller body and protruding in a radial direction. A circular movement of the arm or paddle especially enables the removing tool to cam with the slit and/or to contact the foam remain part such that it is pressed or pulled out of the slit of the foam product.

In a preferred embodiment tha arm is made of plastic and/or is flexible. Further, the length of the arm is preferably adjustable, for example by means of a telescopic arm.

According to another preferred embodiment the bending device is a diverting device for diverting a processing direction of the foam product for opening the slit or gap. Such a diverting process step can easily be integrated into a continuously operating line. The slit or gap can be opened to an appropiate extent via adjusting a predetermined diverting angle. For example, the foam product is diverted at a first diverting spot to remove the foam remain parts from the slits of a first surface of the foam product and is diverted at further diverting spots to remove the foam remain parts from the slits of furhter surfaces of the foam product.

According to a further embodiment the number of removing tools corresponds to the number of bending devices. Preferably, an assembly of one bending or diverting device and one removing tool positioned in relation to each other enables the removal of the foam remain parts from one side or surface of the foam product.

In a further preferred embodiment a brushing device having at least one brush for brushing the slit after removal of the foam remain part and/or a blasting device having at least one blasting nozzle for blasting the slit is provided. Preferably, the brushing device comprises several brushes movable along the longitudinal direction of the slit, wherein the number of brushes corresponds to the number of slits.

Further, it is possible to provide a conveyor belt having a plurality of guide rolls in order to support and/or transport the foam product along the processing direction.

To define the foam remain part to be removed from the foam product a slit device for providing at least one slit into the foam product can be provided.

According to the present invention the method for removing of a foam remain part arranged in a slit of a foam product, in particular a mattress, comprises the steps of bending the foam product to open the slit and removing the foam remain part by means of at least one removing tool gripping the foam remain part from the open slit.

According to a preferred embodiment the removing tool comprises a roller body and at least one arm, in particular a paddle, mounted to the roller body and protruding in a radial direction, wherein the removing tool is rotated around a rotating axis for gripping and removing the foam remain part from the slit. For example, the removing tool is rotated around a rotating axis extending substantially perpendicular to the processing direction of the foam product.

In a further preferred embodiment the foam product is bended by means of diverting a processing direction of the foam product to open the slit. Preferably, the foam product is diverted by a predetermined angle to adjust a certain aperture angle of the slit.

According to a preferred embodiment the foam product is diverted at a first diverting spot by means of a first bending device in a first diverting direction to remove the foam remain part from a first surface of the foam product and is diverted at a second diverting spot by means of a second bending device in a second diverting direction to remove the foam remain part from a second surface of the foam product.

According to a preferred embodiment the foam product is moved along the processing direction via a conveyor belt having a plurality of guide rolls in order to support and/or transport the foam product.

According to a further preferred embodiment the slit is brushed and/or blasted after removal of the foam remain part, particularly for removing residual foam remains like dust and/or further foam remain parts.

Other features and advantages of the present invention will come apparent from the following more detailed description of the embodiment, which describe, by way of example, the principles of the invention.
- Fig. 1: shows a schematic cross-sectional view of an operating line for removing of foam remains from a mattress;
- Fig. 2: shows a perspective view of the mattress before passing through the operating line of Fig. 1;
- Fig. 3: shows a perspective view of the mattress after passing through the operating line of Fig. 1;
- Fig. 4: shows a perspective view of a foam remain part of the mattress;

- Fig. 5: shows a schematic enlarged view of detail V of Fig. 1 according to a first embodiment, and
- Fig. 6: shows a schematic enlarged view of detail V of Fig. 1 according to a second embodiment.

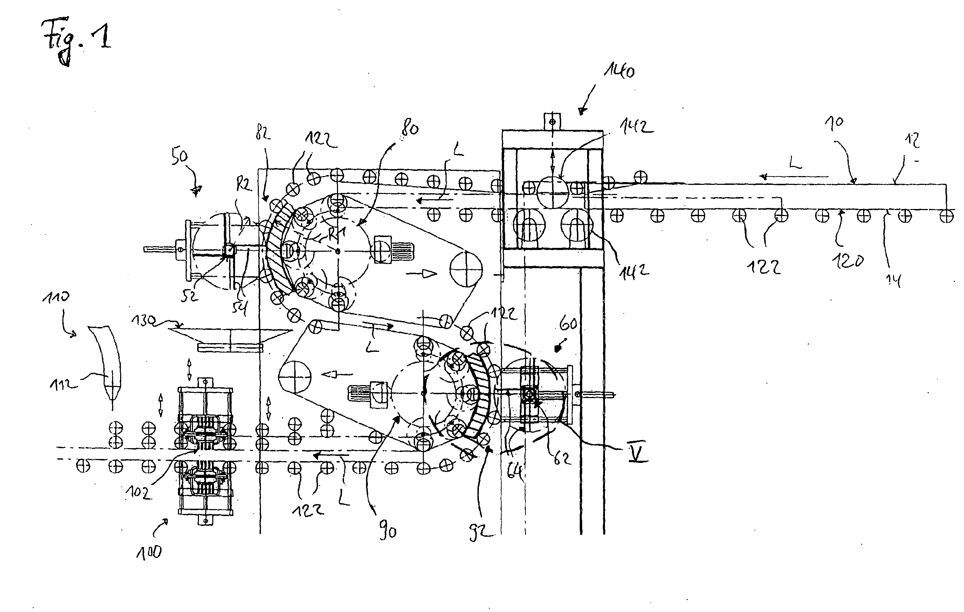

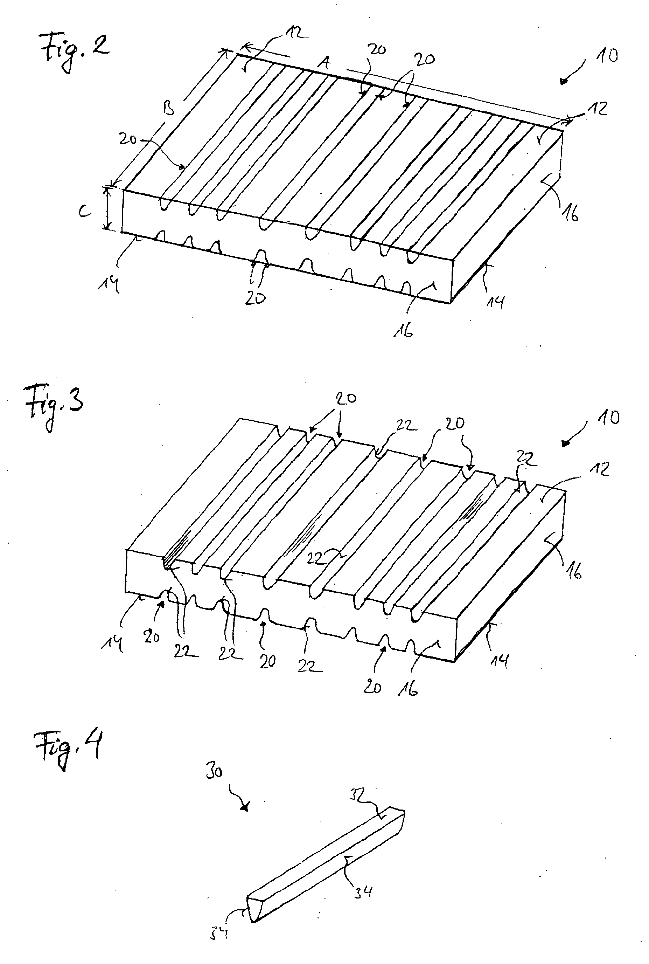

Fig. 1 schematically shows an operating line for removing of foam remains from a foam product 10, which preferably is a mattress. According to Fig. 2 and 3 the foam product 10 comprises a first surface 12, a second surface 14 and a side surface 16 and has a length A, a width B and a height C. Such a mattress is made from a block of elastic polyurethane soft foam or the like.

Fig. 2 shows the foam product 10 before passing through the operating line of Fig. 1 having a plurality of slits 20 to define the foam remain parts 30 to be removed from the foam product. The slits 20 are provided parallel to one another in a longitudinal direction in order to reach different stiffnesses along the length A of the mattress. Fig. 3 shows the foam product 10 after removal of the foam remain parts 30 from the slits 20. Further, Fig. 4 shows a foam remain part 30 removed by means of the apparatus of Fig. 1.

Each slit 20 is cut into the foam block of foam product 10 by means of a slit device or slit die (not shown). As Fig. 3 shows, the slit 20 has a slit surface 22 with a cross section widening towards the respective surface 12 or 14 of the foam product 10. However, also a cross section narrowing towards the first side 12 and/or cross sections having substantially linear or curved shape are possible.

In order to support and transport the foam product 10 along a processing direction L a conveyer belt 120 and a plurality of guide rolls 122 are provided. At the beginning of the operating line shown in Fig. 1 a crushing device 140 having crushing rollers 142 is provided to open the pores and/or cells of the elastic polyurethane soft foam material of the foam product 10.

Afterwards the foam product 10 is transported via the conveyor belt 120 to a first diverting spot 82 where the foam product 10 is diverted by means of a first bending device 80 to open the slits 20 on the first surface 12 of the foam product 10. The first bending device 80 bends the foam product 10 in such a way that the gap between a side surface 34 of the foam remain part 30 and the slit surface 22 is widened. Adjacent to the first bending device 80 a first removing tool 50 is positioned which has several paddles 54 radially protruding from a roller body 52.

At the second diverting spot 92 the foam product 10 is diverted by means of a second bending device 90 to open the slits 20 on the second surface 14 of the foam product 10. The second bending device 90 bends the foam product 10 in such a way that the gap between a side surface 34 of the foam remain part 30 and the slit surface 22 is widened. Adjacent to the second bending device 90 a second removing tool 60 is positioned which has several paddles 64 radially protruding from a roller body 62.

The paddles 54 and 64 are made of plastics and are flexible. The length of the paddles 54 and 64 can be adjustable.

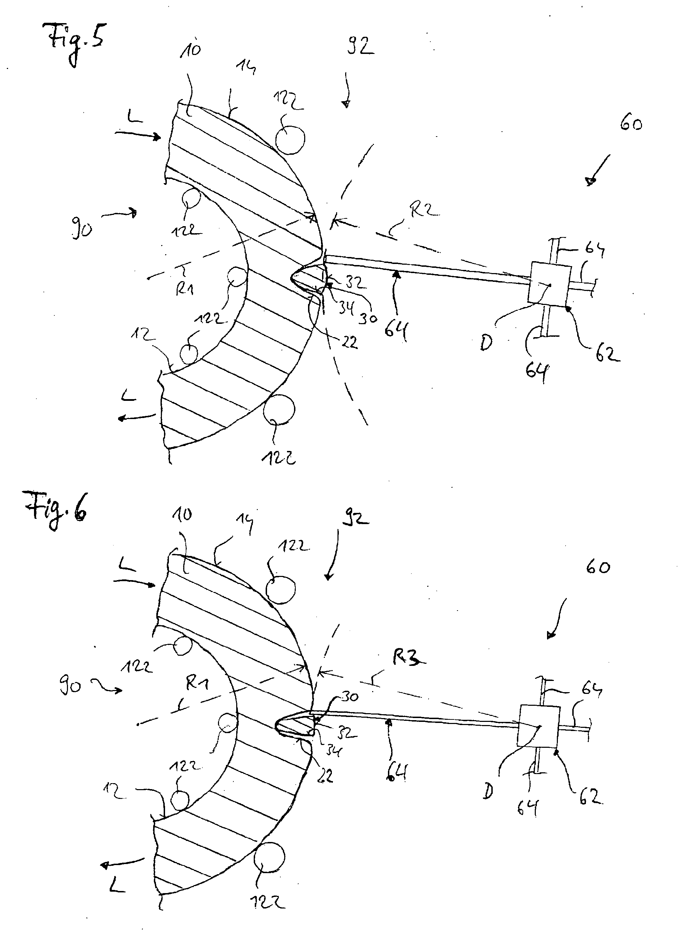

To remove the foam remain parts 30 from the slits 20 two possibilites are shown in Figures 5 and 6 with regard to the second diverting spot 92. However, this also applies to the first diverting spot 82.

According to Fig. 5 the second diverting unit 90 bends the foam product 10 in such a way that the second surface 14 extends along a curve having the radius R1 and that the foam remain part 30 to be removed projects with its outer surface 32 beyond the curve having the radius R1. The paddle 64 has a length according to the radius R2 in order to grip the outer surface 32 of the foam remain part 30. Therefore, the paddle 64 can contact and grip the foam remain part 30 when rotated around rotating axis D to remove it out of the foam product 10 via pressing or pulling out. In other words, it is not necessary for the paddle 64 to engage with the gap formed by the slit 20 to remove the foam remain part 30. It is sufficient that the paddle 64 grips or contacts the foam remain part 30 and presses or pulls it out of the slit 20 via the rotating movement of the paddle 64.

Alternatively, as shown in Fig. 6, the free end of the flexible paddle 64 rotating around rotating axis D engages with the gap formed by the slit 20 between the side surface 34 of the foam remain part 30 and the slit surface 22. The paddle 64 has a length according to the radius R3 in order to engage with the slit 20 between the side surface 34 and the slit surface 24. Radius R3 can correspond to radius R2 or not. To cam with the slit 20, the paddle 64, if necessary, pushes back the second surface 14 of the foam product 10 to engage with the slit 20. Afterwards the elastic material of the pushed area of the second surface 14 reassumes its previous shape. To remove the foam remain part 30, it is sufficient that the paddle 64 grips the foam remain part 30 and presses or pulls it out of the slit 20 via the rotating movement of the paddle 64.

In order to collect the foam remain parts 30 shown in Fig. 4 at least one collecting vessel 130 is positioned to collect the foam remain parts 30 removed by the paddle 54 and/or paddle 64. Thus, it is possible to recycle the foam remain parts 30 for the production of a foam product 10.

At the end of the operating line a brushing device 100 comprises several brushes 102 which are moved in a direction transverse to the processing direction L in order to remove residual foam remains within the slits 20. Finally, a blasting nozzle 112 of a blasting device 110 removes dust within the slit 20.

### List of reference signs

- 10: foam product
- 12: first surface
- 14: second surface
- 16: side surface
- 20: slit
- 22: slit surface
- 30: foam remain part
- 32: outer surface
- 34: side surface
- 50: first removing tool
- 52: roller body
- 54: paddle
- 60: second removing tool
- 62: roller body
- 64: paddle
- 80: first bending device
- 82: first diverting spot
- 90: second bending device
- 92: second diverting spot
- 100: brushing device
- 102: brush

- 110: blasting device
- 112: blasting nozzle
- 120: conveyor belt
- 122: guide rolls
- 130: collecting vessel
- 140: crushing device
- 142: crushing roller
- A: length
- B: width
- C: height
- R1: radius
- R2: radius
- R3: radius
- L: processing direction
- D: rotating axis

## Claims

1. Apparatus for removing of a foam remain part (30) arranged in a slit (20) of a foam product (10), in particular a mattress, **characterized by**
a bending device (80, 90) for opening the slit (20) by means of bending the foam product (10) and
at least one removing tool (50, 60) for removing the foam remain part (30) from the open slit (20).

2. Apparatus according to claim 1, **characterized in that** the removing tool (50, 60) is movable, in particular rotatable around a rotating axis (D).

3. Apparatus according to any of claims 1 or 2, **characterized in that** the removing tool (50, 60) comprises a roller body (52, 62) and at least one arm (54, 64), in particular a paddle, mounted to the roller body (52, 62) and protruding in a radial direction.

4. Apparatus according to claim 3, **characterized in that** the arm (54, 64) is made of plastic and/or is flexible.

5. Apparatus according to any of claims 3 or 4, **characterized in that** the length of the arm (54, 64) is adjustable.

6. Apparatus according to any preceding claim, **characterized in that** the bending device (80, 90) is a diverting device for diverting a processing direction (L) of the foam product (10) for opening the slit (20).

7. Apparatus according to any preceding claim, **characterized in that** the number of removing tools (50, 60) corresponds to the number of bending devices (80, 90).

8. Apparatus according to any preceding claim, **characterized by** a brushing device (100) having at least one brush (102) for brushing the slit (20) after removal of the foam remain part (30) and/or by a blasting device (110) having at least one blasting nozzel (112) for blasting the slit (20).

9. Apparatus according to any preceding claim, **characterized by** a conveyor belt (120) having a plurality of guide rolls (122) in order to support and/or transport the foam product (10) along the processing direction (L).

10. Method for removing of a foam remain part (30) arranged in a slit (20) of a foam product (10), in particular a mattress, comprising the steps of:
a) bending the foam product (10) via a bending device (80, 90), wherein the foam product (10) is bended by means of diverting a processing direction (L) of the foam product (10) to open the slit (20), and
b) removing the foam remain part (30) by means of at least one removing tool (50, 60) gripping the foam remain part (30) from the open slit (20).

11. Method according to claim 10, **characterized in that** the removing tool (50, 60) comprises a roller body (52, 62) and at least one arm (54, 56), in particular a paddle, mounted to the roller body (52, 62) and protruding in a radial direction, wherein the removing tool (50, 60) is rotated around a rotating axis (D) for gripping and removing the foam remain part (30) from the slit (20).

12. Method according to any of claims 10 to 11, **characterized in that** the foam product (10) is diverted at a first diverting spot (82) by means of a first bending device (80) in a first diverting direction to remove the foam remain part (30) from a first surface (12) of the foam product (10) and that the foam product (10) is diverted at a second diverting spot (92) by means of a second bending device (90) in a second diverting direction to remove the foam remain part (30) from a second surface (14) of the foam product (10).

13. Method according to any of claims 10 to 12, **characterized in that** the foam product (10) is moved along the processing direction (L) via a conveyor belt (120) having a plurality of guide rolls (122) in order to support and/or transport the foam product (10).

14. Method according to any of claims 10 to 13, **characterized in that** the slit (20) is brushed and/or blasted after removal of the foam remain part (30).

## Patentansprüche

1. Vorrichtung zum Entfernen eines sich in einem Spalt (20) eines Schaumstoffprodukts (10), insbesondere einer Matratze, befindenden Schaumstoffrestes (30), **gekennzeichnet durch** eine Biegevorrichtung (80, 90) zur Öffnung des Spalts (20) mittels Biegen des Schaumstoffprodukts (10) und wenigstens ein Entfernungswerkzeug (50, 60) zum Entfernen des Schaumstoffrestes (30) von dem offenen Spalt (20).

2. Vorrichtung nach Anspruch 1, **dadurch gekennzeichnet, dass** das Entfernungswerkzeug (50, 60) bewegbar, insbesondere um eine Drehachse (D) drehbar, ist.

3. Vorrichtung nach einem der Ansprüche 1 oder 2, **dadurch gekennzeichnet, dass** das Entfernungswerkzeug (50, 60) wenigstens einen Rollenkörper (52, 62) und wenigstens einen Arm (54, 64), insbesondere eine Schaufel, die an dem Rollkörper (52, 62) befestigt ist und sich in Radialrichtung erstreckt, aufweist.

4. Vorrichtung nach Anspruch 3, **dadurch gekennzeichnet, dass** der Arm (54, 64) aus Kunststoff hergestellt ist und/oder biegsam ist.

5. Vorrichtung nach einem der Ansprüche 3 oder 4, **dadurch gekennzeichnet, dass** die Länge des Arms (54, 64) verstellbar ist.

6. Vorrichtung nach einem der voranstehenden Ansprüche, **dadurch gekennzeichnet, dass** die Biegevorrichtung (80, 90) eine Umlenkeinrichtung zum Umlenken einer Fertigungsrichtung (L) des Schaumstoffprodukts (10) zum Öffnen des Spalts (20), ist.

7. Vorrichtung nach einem der voranstehenden Ansprüche, **dadurch gekennzeichnet, dass** die Anzahl an Entfernungswerkzeugen (50, 60) der Anzahl an Biegevorrichtungen (80, 90) entspricht.

8. Vorrichtung nach einem der voranstehenden Ansprüche, **gekennzeichnet durch** eine Bürstvorrichtung (100) mit wenigstens einer Bürste (102) zum Bürsten des Spalts (20) nach der Entfernung des Schaumstoffrestes (30) und/oder **durch** eine Blasvorrichtung (110) mit wenigstens einer Blasdüse (112) zum Blasen des Spalts (20).

9. Vorrichtung nach dem einem der voranstehenden Ansprüche, **gekennzeichnet durch** ein Förderband (120) mit einer Vielzahl an Führungsrollen (120) zur Abstützung und/oder zum Transport des Schaumstoffprodukts (10) entlang der Fertigungsrichtung (L).

10. Verfahren zum Entfernen eines sich in einem Spalt (20) eines Schaumstoffprodukts (10), wie insbesondere einer Matratze, befindenden Schaumstoffrestes (30), umfassend die Verfahrensschritte:
a) Biegen des Schaumstoffprodukts (10) durch eine Biegevorrichtung (80, 90), wobei das Schaumstoffprodukt (10) durch Umlenken einer Fertigungsrichtung (L) des Schaumstoffprodukts (10) zum Öffnen des Spalts (20) gebogen wird und
b) Entfernen des Schaumstoffrestes (30) mittels wenigstens eines den Schaumstoffrest (30) von dem offenen Spalt (20) erfassenden Entfernungswerkzeugs (50, 60).

11. Verfahren nach Anspruch 10, **dadurch gekennzeichnet, dass** das Entfernungswerkzeug (50, 60) einen Rollenkörper (52, 62) und wenigstens einen Arm (54, 56), insbesondere eine Schaufel, die an dem Rollenkörper (52, 62) befestigt ist und sich in einer Radialrichtung erstreckt, aufweist, wobei das Entfernungswerkzeug (50, 60) um eine Drehachse (D) zum Erfassen und Entfernen des Schaumstoffrestes (30) aus dem Spalt (20), gedreht wird.

12. Verfahren nach einem der Ansprüche 10 bis 11, **dadurch gekennzeichnet, dass** das Schaumstoffprodukt (10) an einem ersten Umlenkpunkt (82) mittels einer ersten Biegevorrichtung (80) in einer ersten Umlenkrichtung zum Entfernen des Schaumstoffrestes (30) von einer ersten Oberfläche (12) des Schaumstoffprodukts (10) umgelenkt wird und, dass das Schaumstoffprodukt (10) an einem zweiten Umlenkpunkt (92) mittels einer zweiten Biegevorrichtung (90) in einer zweiten Umlenkrichtung zum Entfernen des Schaumstoffrestes (30) von einer zweiten Oberfläche (14) des Schaumstoffprodukts (10) umgelenkt wird.

13. Vorrichtung nach einem der Ansprüche 10 bis 12, **dadurch gekennzeichnet, dass** das Schaumstoffprodukt (10) entlang der Fertigungsrichtung (L) mittels eines Förderbands (120) mit einer Vielzahl an Führungsrollen (122) zum Abstützen und/oder Transportieren des Schaumstoffprodukts (10) bewegt wird.

14. Vorrichtung nach einem der Ansprüche 10 bis 13, **dadurch gekennzeichnet, dass** der Spalt (20) nach dem Entfernen des Schaumstoffrestes (30) gebürstet und/oder geblasen wird.

## Revendications

1. Appareil pour supprimer une partie restante en mousse (30) disposée dans une fente (20) d'un produit en mousse (10), en particulier un matelas, **caractérisé par**
un dispositif de flexion (80, 90) pour ouvrir la fente (20) au moyen d'une flexion du produit en mousse (10), et
au moins un outil de suppression (50, 60) pour supprimer la partie restante en mousse (30) hors de la fente ouverte (20).

2. Appareil selon la revendication 1, **caractérisé en ce que** l'outil de suppression (50, 60) est mobile, en particulier en rotation autour d'un axe de rotation (D).

3. Appareil selon l'une quelconque des revendications 1 ou 2, **caractérisé en ce que** l'outil de suppression (50, 60) comprend un corps roulant (52, 62) et au moins un bras (54, 64), en particulier une pale, monté sur le corps roulant (52, 62) et en projection dans une direction radiale.

4. Appareil selon la revendication 3, **caractérisé en ce que** le bras (54, 64) est réalisé en matière plastique et/ou est flexible.

5. Appareil selon l'une quelconque des revendications 3 ou 4, **caractérisé en ce que** la longueur du bras (54, 64) est ajustable.

6. Appareil selon l'une quelconque des revendications précédentes, **caractérisé en ce que** le dispositif de flexion (80, 90) est un dispositif de détournement pour détourner une direction de traitement (L) du produit en mousse (10) pour ouvrir la fente (20).

7. Appareil selon l'une quelconque des revendications précédentes, **caractérisé en ce que** le nombre d'outils de suppression (50, 60) correspond au nombre de dispositifs de flexion (80, 90).

8. Appareil selon l'une quelconque des revendications précédentes, **caractérisé par** un dispositif de brossage (100) ayant au moins une brosse (102) pour brosser la fente (20) après enlèvement de la partie restante en mousse (30) et/ou par un dispositif de soufflage (110) ayant au moins une buse de soufflage (112) pour souffler la fente (20).

9. Appareil selon l'une quelconque des revendications précédentes, **caractérisé par** une courroie de convoyeur (120) ayant une pluralité de rouleaux de guidage (122) afin de supporter et/ou de transporter le produit en mousse (10) le long de la direction de traitement (L).

10. Procédé pour supprimer une partie restante en mousse (30) disposée dans une fente (20) d'un produit en mousse (10), en particulier un matelas, comprenant les étapes consistant à :
a) faire fléchir le produit en mousse (10) via un dispositif de flexion (80, 90), de sorte que le produit en mousse (10) est fléchi au moyen de détournement d'une direction de traitement (L) du produit en mousse (10) pour ouvrir la fente (20), et
b) supprimer la partie restante en mousse (30) au moyen d'au moins un outil de suppression (50, 60) qui saisit la partie restante en mousse (30) hors de la fente ouverte (20).

11. Procédé selon la revendication de 10, **caractérisé en ce que** l'outil de suppression (50, 60) comprend un corps roulant (52, 62), et au moins un bras (54, 56), en particulier une pale, monté sur le corps roulant (52, 62) et en projection dans une direction radiale, dans lequel l'outil de suppression (50, 60) est mis en rotation autour d'un axe de rotation (D) pour saisir et supprimer la partie restante en mousse (30) hors de la fente (20).

12. Procédé selon l'une quelconque des revendications 10 à 11, **caractérisé en ce que** le produit en mousse (10) est détourné au niveau d'un premier point de détournement (82) au moyen d'un premier dispositif de flexion (80) dans une première direction de détournement pour supprimer la partie restante en mousse (30) depuis une première surface (12) du produit en mousse (10), et **en ce que** le produit en mousse (10) est détourné au niveau d'un second point de détournement (92) au moyen d'un second dispositif de flexion (90) dans une seconde direction de détournement pour supprimer la partie restante en mousse (30) depuis une seconde surface (14) du produit en mousse (10).

13. Procédé selon l'une quelconque des revendications 10 à 12, **caractérisé en ce que** le produit en mousse (10) est déplacé le long de la direction de traitement (L) via une courroie de convoyeur (120) ayant une pluralité de rouleaux de guidage (122) afin de supporter et/ou de transporter le produit en mousse (10).

14. Procédé selon l'une quelconque des revendications 10 à 13, **caractérisé en ce que** la fente (20) est brossée et/ou soufflée après suppression de la partie restante en mousse (30).
